# EUROPÄISCHE PATENTSCHRIFT

(11) **EP 3 119 656 B1**
(45) Veröffentlichungstag und Bekanntmachung des Hinweises auf die Patenterteilung: **24.06.2020**
(21) Anmeldenummer: 14823969.2
(22) Anmeldetag: 17.12.2014
(51) Int. Cl.: B60W 20/00, B60W 10/08, B60K 6/48, B60W 30/20, F16F 15/12

(54) **HYBRIDMODUL SOWIE ANTRIEBSSTRANG MIT DEM HYBRIDMODUL**
HYBRID MODULE AND POWER TRAIN WITH THE HYBRID MODUL
MODULE HYBRIDE ET CHAÎNE CINÉMATIQUE AVEC LE MODULE HYBRIDE

(30) Priorität: 19.03.2014 DE 102014205136
(43) Veröffentlichungstag der Anmeldung: 25.01.2017
(73) Patentinhaber: ZF Friedrichshafen AG, 88046 Friedrichshafen (DE)
(72) Erfinder: ORLAMÜNDER, Andreas, 97453 Schonungen (DE)
(74) Vertreter: ZF Friedrichshafen AG
(86) Internationale Anmeldenummer: PCT/EP2014/078152
(87) Internationale Veröffentlichungsnummer: WO 2015/139790

(56) Entgegenhaltungen:
- DE-A1-102007 049 075
- DE-A1-102011 013 483
- DE-A1-102012 203 778
- DE-A1-102012 209 275
- DE-A1-102012 214 362

## Beschreibung

Hybridmodule werden in eine Vielzahl von Fahrzeugen, in unterschiedlichen Ausführungen, eingesetzt. Bei manchen Anwendungen sind die Hybridmodule auf einer Eingangsseite mit einem Verbrennungsmotor oder einer Verbrennungskraftmaschine und an ihrer Ausgangsseite mit einem schaltbaren Getriebe und weiteren Komponenten des Antriebsstrangs verbunden. Über den Verbrennungsmotor können bei einer Übertragung eines Antriebsmoments auch Drehungleichförmigkeiten oder unerwünschte Schwingungen in das Hybridmodul eingekoppelt werden. Ein Drehmomentanteil, der zu den unerwünschten Schwingungen oder Drehungleichförmigkeiten führt, kann gegebenenfalls einem Zündverhalten und/oder auch einer Drehzahl bzw. einem Betriebszustand des Verbrennungsmotors geschuldet sein.

In vielen Fällen umfasst das Hybridmodul ein Schwingungsreduzierungssystem, um die unerwünschte Schwingung in dem Hybridmodul oder dem Antriebsstrang zu reduzieren. Das Schwingungsreduzierungssystem soll also dazu dienen, ein aus einer Verbrennungskraftmaschine oder dem Verbrennungsmotor resultierendes Wechseldrehmoment zu vergleichmäßigen, damit dieses nicht zu Schwingungen oder Geräuschanregungen führt, in dem Hybridmodul, dem Antriebsstrang oder anderen Komponenten eines Fahrzeugs in dem das Hybridmodul verbaut ist. Unerwünschte Schwingungen können auch durch andere Faktoren hervorgerufen oder begünstigt werden, beispielsweise einem Fahrbahnbelag oder einen Untergrund, über den sich das Fahrzeug bewegt.

Konventionelle Schwingungsreduzierungssysteme sind deshalb meist so ausgelegt, dass sie alle Betriebszustände der Verbrennungskraftmaschine bzw. Fahrzustände des Fahrzeugs sowie in diesem auftretende Schwingungen reduzieren können. Dies führt in der Regel dazu, dass konventionelle Schwingungsreduzierungssysteme eine geknickte, mehrstufige Schwingungsreduzierungssystemcharakteristik oder Federkennlinie aufweisen. Konventionelle Schwingungsreduzierungssysteme können dazu beispielsweise als ein Zweimasseschwungrad, Leistungsverzweigung oder Wandler in Kombination mit einem Torsionsdämpfer, einem Turbinentorsionsdämpfer und/oder einem Zweidämpferwandler, ausgeführt sein. In manchen Fällen sind die genannten Dämpfer auch mit einem drehzahladaptiven Tilger kombiniert. Solche Schwingungsreduzierungssysteme werden auch als passive Schwingungsreduzierungssysteme bezeichnet.

Bei manchen Hybridmodulen können diese passiven Schwingungsreduzierungssysteme mit einer Elektromaschine zur aktiven Schwingungsreduzierung oder als aktives Schwingungsreduzierungssystem kombiniert sein. Beispielsweise offenbart die DE 197 48 665 A1 eine Vorrichtung zur Schwingungsisolierung in einem Antriebsstrang eines Kraftfahrzeugs. Dabei ist eine elektrische Maschine in dem Antriebsstrang vor einer Schwingungsisolierungseinrichtung als Schwingungsreduzierungssystem angeordnet. Mithilfe der elektrischen Maschine werden auf die Eingangswelle bzw. auf die Ausgangswelle derartige Drehmomente aufgebracht, dass die Schwingungsisoliereinrichtung eine vergrößerte oder verkleinerte effektive Federsteifigkeit aufweist.

DE 10 2012 214 362 A1 offenbart einen Torsionsschwingungsdämpfer.

In DE 10 2012 209 275 A1 wird ein hybridischer Antriebsstrang mit aktiver Drehschwingungsdämpfung offenbart.

DE 10 2011 013483 A1 offenbart ein im Antriebsstrang eines Kraftfahrzeuges angeordnetes Zweimassenschwungrad.

Es besteht daher ein Bedarf daran, einen Kompromiss zwischen einer Verbesserung der Schwingungsreduzierung bei einem Hybridmodul und einem einfachen Aufbau des Hybridmoduls zu verbessern. Diesem Bedarf trägt ein Hybridmodul nach dem Anspruch 1 Rechnung.

Ausführungsbeispiele betreffen ein Hybridmodul mit einem Schwingungsreduzierungssystem, das zwischen einer Ausgangsseite und einer Eingangsseite des Hybridmoduls gekoppelt ist. Mit dem Schwingungsreduzierungssystem können in das Hybridmodul eingekoppelte Drehungleichförmigkeiten reduziert werden. Dabei weist das Schwingungsreduzierungssystem eine Vorspannung auf, die höher als eine montagebedingte Vorspannung ist. Das Hybridmodul umfasst auch eine Elektromaschine, die an die Ausgangsseite des Hybridmoduls gekoppelt ist. Mit der Elektromaschine kann ein Drehmoment an der Ausgangsseite eingeleitet werden, das einer in das Hybridmodul eingekoppelte Drehungleichförmigkeit entgegengerichtet ist, um diese zu reduzieren. Dadurch, dass das Schwingungsreduzierungssystem eine Vorspannung aufweist, die höher als eine montagebedingte Vorspannung ist, kann das Schwingungsreduzierungssystem bei manchen Ausführungsbeispielen eine höhere Energiespeicherfähigkeit oder Eigenschaft zur Federarbeit aufweisen, als Systeme ohne Vorspannung.

Die Drehungleichförmigkeit kann dabei auf allen möglichen unterschiedlichen Arten von Anregungen basieren. Die Drehungleichförmigkeit kann von einer Antriebseinrichtung, beispielsweise einem Verbrennungsmotor oder einer Verbrennungskraftmaschine bzw. deren Antriebsverhalten herrühren. Ergänzend oder alternativ kann die Drehungleichförmigkeit an der Eingangsseite eingekoppelt oder an einer anderen Stelle in das Hybridmodul, wie beispielsweise an einer Welle, in das Hybridmodul übertragen werden. Eine mechanische Kopplung zweier Komponenten, zum Beispiel zwischen dem

Schwingungsreduzierungssystem und dem Hybridmodul oder der Elektromaschine mit dem Hybridmodul umfasst sowohl eine unmittelbare als auch eine mittelbare Kopplung.

Eine Vorspannung, die höher ist als eine montagebedingte Vorspannung kann beispielsweise so hoch sein, dass sich die Energiespeicherfähigkeit des Schwingungsreduzierungssystems wesentlich verändert. Eine solche Vorspannung kann in manchen Fällen dazu führen, dass bereits bei einem Verdrehwinkel von 0° ein Drehmoment erforderlich ist, das auch als Anfangsmoment bezeichnet werden kann, um eine Verdrehung oder ein Ansprechen des Schwingungsreduzierungssystems zu bewirken. Das Anfangsmoment, das eine Verdrehung oder ein Ansprechen des Schwingungsreduzierungssystems bewirkt, ist größer als Null und/oder die montagebedingte Vorspannung des Schwingungsreduzierungssystems. Kleinere Momente als das sogenannte Anfangsmoment würden unter Umständen nicht zu einem Ansprechen des Schwingungsreduzierungssystems führen. Eine montagebedingte Vorspannung kann zum Beispiel eine Vorspannung des Schwingungsreduzierungssystems sein, um eine mechanische Kopplung oder Anlage zwischen den einzelnen Komponenten des Schwingungsreduzierungssystems zu bewirken. Eine rein montagebedingte Vorspannung, kann gegebenenfalls nur dazu dienen, dass ein Federelement korrekt zwischen Abdeckblechen positioniert ist. Eine montagebedingte Vorspannung kann kleiner als 5% eines von dem Verbrennungsmotor durchschnittlich abgebbaren Drehmoments sein.

Dabei entspricht die Vorspannung des Schwingungsreduzierungssystems deshalb mindestens einem Anteil von 5 % eines an der Eingangsseite maximal einkoppelbaren Drehmoments. So könnte eine Energiespeicherfähigkeit des Schwingungsreduzierungssystems ausreichend erhöht werden, um in bestimmten Betriebszuständen eine Schwingungsreduzierung zu verbessern. Um bei anderen Ausführungsbeispielen die Schwingungsreduzierung in anderen Belastungszuständen, beispielsweise in Bereichen mit höheren Drehzahlen, zu verbessern, kann die Vorspannung mindestens einem Anteil von 10% oder 20% eines an der Eingangsseite maximal einkoppelbaren Drehmoments entsprechen. Bei dem maximal einkoppelbaren Drehmoment kann es sich dabei zum Beispiel um ein von einer Antriebseinrichtung durchschnittlich maximal bereitstellbares Drehmoment handeln, ohne einen Drehmomentanteil der Drehungleichförmigkeit. Zum Beispiel kann es sich bei der Antriebseinrichtung um einen Verbrennungsmotor oder eine Verbrennungskraftmaschine handeln.

Bei Ausführungsbeispielen, bei denen das Hybridmodul mit einem Verbrennungsmotor gekoppelt ist, kann die Vorspannung einem Drehmoment entsprechen, das größer ist als ein Drehmomentanteil einer Drehungleichförmigkeit, der bei einem Anlassen oder in einem unteren Drehzahlbereich des Verbrennungsmotors auftritt. Dadurch kann bei manchen Ausführungsbeispielen bewirkt werden, dass Drehmomentanteile einer Drehungleichförmigkeit bei einem Anlassen oder in einem unteren Drehzahlbereichen, nicht zu einem Ansprechen des Schwingungsreduzierungssystems führen und auch nicht von diesem gedämpft werden. Durch die Vorspannung des Schwingungsreduzierungssystems kann bei manchen Ausführungsbeispielen ein Betriebszustand oder ein Drehzahlbereich, beispielsweise der Anlaufbereich des Verbrennungsmotors vollständig ausgeblendet werden. Dies wird gemäß Ausführungsbeispielen jedoch nicht durch die Verwendung eines steiferen Schwingungsreduzierungssystems oder einer härteren Feder, sondern durch die beschriebene Vorspannung bewirkt. Gegenüber der Verwendung einer härteren Feder kann durch die Vorspannung eine höhere Energiespeicherfähigkeit des Schwingungsreduzierungssystems bewirkt werden. Es kann so ermöglicht werden Schwingungsreduzierungsstufen oder Federstufen sanfter auszulegen, weil nur ein geringerer Bereich von Betriebszuständen bzw. Drehungleichförmigkeiten abzudecken ist. Bei manchen Ausführungsbeispielen kann, indem bestimmte Betriebsoder Lastzustände noch nicht zu einem Ansprechen des Schwingungsreduzierungssystems oder einem darin enthaltenen Federelement führen, ermöglicht werden, dass das vollständige Dämpfungsvermögen und/oder der vollständige Verformungsweg des Schwingungsreduzierungssystems oder des Federelements für andere Betriebszustände genutzt werden kann und/oder noch unverformt bzw. vollständig zur Verfügung stehen.

Um eine Drehungleichförmigkeit, die beispielsweise beim Anlassen oder in einem unteren Drehzahlbereich des Verbrennungsmotors auftritt, wirksam zu reduzieren, kann bei manchen Ausführungsbeispielen die Elektromaschine eingesetzt werden. Elektromaschinen weisen die Eigenart auf, dass sie bei kleiner Drehzahl oder einer Frequenz ein hohes Drehmoment abgeben können. Je höher die Drehzahl respektive Frequenz ist, desto mehr ihres zur Verfügung stehenden Drehmoments muss die Elektromaschine zur Beschleunigung ihrer Masse, wie beispielsweise dem Rotor, aufwenden. Dadurch wird bei höheren Drehzahlen das effektiv abgebbare Drehmoment der Elektromaschine kleiner. Damit sind die Zusatzdrehmomente begrenzt, die durch die Elektromaschine auf der Erregerseite zur Schwingungsreduzierung genutzt werden können. Deshalb ist die Elektromaschine meist gut geeignet, um ein hohes Moment bei kleinen Drehzahlen und ein niedriges Moment bei hohen Drehzahlen abzugeben. Aufgrund dieser Charakteristik der Elektromaschine ist sie in vielen Fällen nicht als alleiniges Schwingungsreduzierungssystem einsetzbar. Die Elektromaschine, beispielsweise auch in Kombination mit einem Speicher, ist oft nicht in der Lage, alle durch einen Verbrennungsmotor hervorgerufenen Drehungleichförmigkeiten in allen Betriebszuständen zu beruhigen. Deshalb wird sie bei vielen Fällen in Verbindung mit einem passiven Schwingungsreduzierungssystem betrieben. Dazu kann mit der Elektromaschine in das Hybridmodul ein Drehmoment eingeleitet werden, das dem Drehmomentanteil der Drehungleichförmigkeit oder dem Drehmoment der Drehungleichförmigkeit entgegengerichtet ist. Dadurch könnte ein Drehmoment, das die Elektromaschine bei niedrigen Drehzahlen bereitstellen kann, zur Reduzierung von Drehungleichförmigkeiten genutzt werden, die bei niedrigen Drehzahlen auftreten können.

Ferner ist das Schwingungsreduzierungssystem ausgebildet, um die Drehungleichförmigkeit bei einer zweiten Drehzahl stärker zu reduzieren als bei einer ersten Drehzahl, bei der zum Reduzieren der Drehungleichförmigkeit ein Drehmoment von der Elektromaschine einleitbar ist. Ferner kann bei manchen Ausführungsbeispielen das Schwingungsreduzierungssystem oder eine Schwingungsreduzierungssystemcharakteristik besser ausgelegt werden, weil sie nur einen schmaleren Bereich abdecken soll oder für diesen ausgelegt werden kann. Die erste Drehzahl kann dabei kleiner sein als die zweite Drehzahl. Bei einem Betrieb des Hybridmoduls mit der ersten Drehzahl kann dann die Elektromaschine beispielsweise in Kombination mit einem Speicherelement zur Schwingungsreduzierung genutzt werden und so wie ein Federelement oder eine aktive Schwingungsreduzierung wirken. Bei manchen Ausführungsbeispielen kann also die Kennlinie des passiven Schwingungsreduzierungssystems, das zum Beispiel Trägheiten, Steifigkeiten, Reibung und/oder optionale Tilger umfassen kann, nur auf Betriebszustände, Drehzahlen oder Drehzahlbereiche optimiert werden, für die die Elektromaschine ein ausreichendes gegenphasiges Drehmoment zum Reduzieren von Drehungleichförmigkeiten nicht bereitstellen kann bzw. die Elektromaschine dem Verbrennungsmotor ein ausreichendes gegenphasiges Wechselmoment nicht überlagern kann.

Dabei weist das Schwingungsreduzierungssystem über eine Auslenkung, die mindestens einem Anteil von 40% einer Gesamtauslenkung entspricht, in dem das Schwingungsreduzierungssystem beanspruchbar ist, einen im Wesentlichen linearen Drehmomentverlauf auf. So kann bei manchen Ausführungsbeispielen eine sanftere Auslegung des Schwingungsreduzierungssystems erfolgen. Beispielsweise kann die Auslenkung ein Drehoder Verdrehwinkel sein und eine Gesamtauslenkung einem Gesamtdrehoder -verdrehwinkel entsprechen, in dem das Schwingungsreduzierungssystem auslenkverdrehbar ist. Das Schwingungsreduzierungssystem kann also ausgebildet sein, um einen charakteristischen Drehmomentverlauf in Abhängigkeit einer Auslenkung des Schwingungsreduzierungssystems zu bewirken, der über eine Auslenkung, die mindestens einem Anteil von 40% einer Gesamtauslenkung entspricht, im Wesentlichen linear ist. Ein im Wesentlichen linearer Drehmomentverlauf kann dabei eventuell geringen, unter Umständen montage-, material und/oder betriebsbedingten Schwankungen von ± 5% unterliegen. So kann der mittlere und/oder momentane Drehmomentverlauf zum Beispiel hinsichtlich seiner Steigung um ± 5% von einem nominellen bzw. mittleren Wert über eine Gesamtsteigung abweichen.

Ergänzend oder alternativ weist das Schwingungsreduzierungssystem bei einigen weiteren Ausführungsbeispielen über eine Gesamtauslenkung, in der das Schwingungsreduzierungssystem beanspruchbar ist, einen Drehmomentverlauf mit zumindest zwei unterschiedlichen Steigungen auf. So kann bei manchen Ausführungsbeispielen ein Aufwand zur Implementierung das Schwingungsreduzierungssystem reduziert sein. In vorteilhafter Ausführung können drei unterschiedliche Steigungen ausgeführt sein. Für ein dreistufiges Schwingungsreduzierungssystem kann sich also eine Schwingungsreduzierungscharakteristik oder Federkennlinie mit drei unterschiedlichen Steigungen ergeben. Zum Beispiel kann das Schwingungsreduzierungssystem bei einer dreistufigen Auslegung eine Stufe mit einem linearen Drehmomentverlauf über eine Auslenkung aufweisen, die mindestens einem Anteil von 40 % der Gesamtauslenkung entspricht. Dabei kann es sich unter Umständen um die zweite Stufe handeln. Ergänzend können sich bei manchen Fällen die erste Stufe und die zweite Stufe jeweils über einen Anteil von 40% der Gesamtauslenkung erstrecken. Bei Ausführungsbeispielen, bei denen das Schwingungsreduzierungssystem zweistufig ausgelegt ist, also maximal zwei unterschiedliche Steifigkeiten oder Stufen aufweist, kann sich der im Wesentlichen lineare Drehmomentverlauf über eine Auslenkung erstrecken, die mindestens einem Anteil von 60% oder sogar 80% einer Gesamtauslenkung des Schwingungsreduzierungssystems entspricht. Zudem kann die dritte oder letzte Stufe des Schwingungsreduzierungssystems bei manchen Ausführungsbeispielen dazu dienen, um Schwingungen oder Drehungleichförmigkeiten zu übertragen, die einen Wert aufweisen, der zwischen 100% und 120% eines durchschnittlich maximal von dem Verbrennungsmotor bereitstellbaren Drehmoments entspricht. Dabei kann es sich beispielsweise um das von dem Verbrennungsmotor oder abgebbare Drehmoment handeln. Damit könnte ein Sicherheitsbereich des Schwingungsreduzierungssystems bereitgestellt werden, mit dem auch Drehmomente übertragen oder abgefangen werden sollen, die sich bei durch ungünstige Überlagerung eines Maximaldrehmoment des Verbrennungsmotors und eines Drehmomentanteils der Drehungleichförmigkeit ergeben können.

Bei einigen weiteren Ausführungsbeispielen weist das Schwingungsreduzierungssystem über einen Gesamtauslenkungsbereich, in dem das Schwingungsreduzierungssystem beansprucht werden kann, einen im Wesentlichen linearen Drehmomentverlauf auf. So könnte gegebenenfalls ein Schwingungsreduzierungssystem mit einer besonders hohen Energiespeicherfähigkeit bereitgestellt werden.

Das Schwingungsreduzierungssystem weist bei manchen Ausführungsbeispielen wenigstens ein Federelement auf, wobei ein Drehmomentfluss von einer Eingangsseite zu einer Ausgangsseite über das Federelement verläuft und wobei die Vorspannung des Schwingungsreduzierungssystems wenigstens teilweise durch eine Vorspannung des wenigstens einen Federelements gebildet ist, wobei die Vorspannung des wenigstens einen Federelements höher als eine montagebedingte Vorspannung ist. Das Schwingungsreduzierungssystem kann bei manchen Ausführungsbeispielen mit einem geringen Aufwand implementiert werden. Bei der Eingangsseite und der Ausgangsseite kann es sich dabei beispielsweise um eine Eingangsseite des Schwingungsreduzierungssystems und eine Ausgangsseite des Schwingungsreduzierungssystems handeln. Für die Vorspannung des Federelements können ebenfalls die für die Vorspannung des Schwingungsreduzierungssystems beschriebenen Merkmale gelten. Ferner kann, wenn das Schwingungsreduzierungssystem eine Mehrzahl von Federelementen aufweist, der Drehmomentfluss vollständig über die Mehrzahl der Federelemente verlaufen oder übertragen werden. Ergänzend oder alternativ kann das Federelement eine Federcharakteristik aufweisen, die die beschriebenen Schwingungsreduzierungssystemcharakteristiken bzw. die entsprechenden charakteristischen Drehmomentverläufe bewirkt. Das Federelement kann als Komponente ausgebildet sein, die sich zum Übertragen eines Drehmomentflusses eignet und zum Beispiel eine einzelne oder eine Kombinationen der folgenden Komponenten umfassen, Schraubenfeder, Torsionsfeder, Drehstabfeder, Biegefeder wie Membranfeder, Blattfeder oder Tellfeder, Luftfeder, Gasdruckfeder Elastomerfeder oder dergleichen.

Ergänzend oder alternativ ist bei manchen Ausführungsbeispielen ein Drehmoment der Elektromaschine zwischen dem Schwingungsreduzierungssystem und der Ausgangsseite des Hybridmoduls einkoppelbar. Dadurch könnte gegebenenfalls bewirkt werden, dass das zur Reduzierung der Drehungleichförmigkeit aufgebrachte Drehmoment nahe an der Ausgangsseite und damit auch nahe ein einem möglichen Messpunkt oder einem Bereich, an dem die Drehungleichförmigkeit besonders gering gehalten werden soll, aufgebracht wird.

Bei einigen weiteren Ausführungsbeispielen kann dazu oder aus anderen Gründen die Elektromaschine auch zwischen dem Schwingungsreduzierungssystem und der Ausgangsseite des Hybridmoduls angeordnet sein. Dadurch könnte unter Umständen ein Bauraum des Hybridmoduls in radialer Richtung reduziert werden. Eine Anordnung der Elektromaschine zwischen dem Schwingungsreduzierungssystem und der Ausgangsseite des Hybridmoduls kann beispielsweise so erfolgen, dass sich das Schwingungsreduzierungssystem und die Elektromaschine in axialer Richtung nicht überlappen bzw. keine überlappenden Bereiche aufweisen. Bei der axialen Richtung kann es sich um eine Drehachse der drehbaren Komponenten des Hybridmoduls handeln. Die Elektromaschine und das Schwingungsreduzierungssystem können also beispielsweise in radialer Richtung nicht ineinander geschachtelt angeordnet sein. Optional können die Elektromaschine und das Schwingungsreduzierungssystem bei anderen Ausführungsbeispielen in axialer Richtung überlappende Bereiche aufweisen. So könnte gegebenenfalls ein Bauraum des Hybridmoduls in axialer Richtung reduziert werden.

Die Elektromaschine kann bei manchen Ausführungsbeispielen über eine Kupplungseinrichtung von der Eingangsseite und/oder dem Schwingungsreduzierungssystem getrennt bzw. mit diesem verbunden oder gekoppelt werden. Damit könnte die Elektromaschine ja nach Bedarf und/oder Betriebszustand mit dem Schwingungsreduzierungssystem verbunden werden. Bei manchen Ausführungsbeispielen des Hybridmoduls steht das Schwingungsreduzierungssystem bei allen Betriebszuständen drehfest mit der Eingangsseite des Hybridmoduls in Verbindung. Die Implementierung einer Kupplung kann also gegebenenfalls entfallen.

Ergänzend oder alternativ kann das Hybridmodul bei manchen Ausführungsbeispielen an einer Ausgangsseite von einem an die Ausgangsseite anschließenden Teil des Antriebsstrangs bzw. eines Restantriebsstrangs entkoppelt werden. Dazu kann beispielsweise eine Kupplungseinrichtung vorhanden sein. Die Kupplungseinrichtung kann gegebenenfalls Teil des Hybridmoduls oder Teil des Getriebes sein. Zum Beispiel bei Fällen, bei denen ein Automatikgetriebe mit dem Hybridmodul verbunden ist, kann, um die Entkopplung zu bewirken, das Getriebe in eine Neutralstellung geschaltet werden. Bei manchen Ausführungsbeispielen kann das Hybridmodul um die beschriebene Trennung zu bewirken, mit einer Steuerschaltung verbunden werden oder diese umfassen. Die Kupplungs- oder Kopplungseinrichtung kann als formschlüssige oder als reibschlüssige Kupplung, beispielsweise Rutschkupplung, Reibkupplung oder Lamellenkupplung ausgebildet sein.

Bei einigen weiteren Ausführungsbeispielen umfasst das Schwingungsreduzierungssystem zumindest ein Zweimasseschwungrad und /oder zumindest eine Leistungsverzweigung und/oder zumindest einen Torsionsschwingungsdämpfer. Optional können die genannten Systeme auch bei einer Kupplungsscheibe integriert sein. Bei manchen Ausführungsbeispielen kann so ein Implementierungsaufwand reduziert werden. Optional kann das Schwingungsreduzierungssystem auch als genau eine der beschriebenen Komponenten ausgebildet sein. Unter Umständen kann zwischen einer Eingangsseite und einer Ausgangsseite des Hybridmoduls genau eines der genannten Bauteile angeordnet sein, um eine vollständige Übertragung des Drehmomentflusses zu bewirken. So könnte unter Umständen der konstruktive Aufwand für das Hybridmodul reduziert sein. Bei dem Zweimasseschwungrad, dem Torsionsschwingungsdämpfer und der Leistungsverzweigung kann es sich zum Beispiel um Schwingungsreduzierungssysteme handeln, bei denen der Drehmomentfluss vollständig über ein Federelement übertragen wird. Es handelt sich beispielsweise nicht um Schwingungsreduzierungssysteme, welche auch als Drehschwingungstilger oder Tilger bezeichnet werden können, bei denen zur Schwingungstilgung Massen ausgelenkt werden, die nicht auch gleichzeitig zur Übertragung des Drehmomentflusses beitragen, also im Drehmomentfluss liegen. Die genannten Systeme können jedoch mit einem Drehschwingungstilger kombiniert sein.

Bei einigen weiteren Ausführungsbeispielen weist das Hybridmodul eine Steuerschaltung auf oder ist mit einer Steuerschaltung verbindbar. Mittels der Steuerschaltung kann die Elektromaschine, basierend auf einer erfassten Drehungleichförmigkeit, so angesteuert werden, dass die Elektromaschine ein Drehmoment an der Ausgangsseite des Hybridmoduls einleitet, das der Drehungleichförmigkeit entgegengerichtet ist, um diese zu reduzieren. Beispielsweise kann dadurch die Reduzierung der Drehungleichförmigkeit auf einfache Art und Weise geregelt und/oder gesteuert werden. Bei Ausführungsbeispielen, bei denen die Steuerschaltung nicht Teil des Hybridmoduls ist, kann die Steuerschaltung auch in einem Steuergerät oder einer Steuerschaltung des Getriebes, der Elektromaschine, des Verbrennungsmotors und/oder einer Fahrzeugsteuerung implementiert sein.

Beispielsweise kann das Hybridmodul zum Erfassen der Drehungleichförmigkeit oder zum Erfassen des Auftretens der Drehungleichförmigkeit zumindest einen Sensor umfassen. Dadurch, dass das Auftreten der Drehungleichförmigkeit über einen Sensor ermittelt wird, könnte die Reduzierung der Drehungleichförmigkeit verbessert werden. Dies kann möglich sein, weil so direkt, auf tatsächlich auftretende Drehungleichförmigkeiten reagiert werden kann. Informationen, wie zum Beispiel eine Ordnung der Anregung oder Überlagerungen, die sich durch Betriebszustände ergeben, können bei manchen Ausführungsbeispielen so erfasst werden. Mit dem Sensor kann eventuell ein Wert, eine Richtung und/oder eine Größe der Drehungleichförmigkeit erfasst werden. Der Sensor kann an jedweder Stelle angeordnet oder mit dieser gekoppelt sein, die sich zum Erfassen des Auftretens der Drehungleichförmigkeit eignet. Zum Beispiel kann der Sensor an dem Schwingungsreduzierungssystem selbst angeordnet sein. Dazu kann an einer Eingangsseite und/oder einer Ausgangsseite des Schwingungsreduzierungssystems gegebenenfalls ein Sensor angeordnet sein. Ergänzend oder alternativ, kann der Sensor an einer Eingangsseite und/oder einer Ausgangsseite des Hybridmoduls angeordnet oder mit dieser gekoppelt sein. Der Sensor kann beispielsweise auch ausgebildet und angeordnet sein, um die Drehungleichförmigkeit an der Elektromaschine, einer Welle, einem Gehäuse oder dergleichen zu erfassen. Als Sensor können alle möglichen Arten von Sensoren eingesetzt werden, die sich zum Erfassen einer Schwingung oder einer Drehungleichförmigkeit eignen, zum Beispiel induktive, piezoelektrische, magnetoresistive Sensoren oder dergleichen.

Ausführungsbeispiele betreffen ferner einen Antriebsstrang mit einem Hybridmodul nach zumindest einem der vorhergehenden Ausführungsbeispielen, das an seiner Eingangsseite mit einem Verbrennungsmotor und an seiner Ausgangsseite mit einem Getriebe gekoppelt ist. Das Getriebe kann ausgangsseitig mit zumindest einem antreibbaren Rad gekoppelt werden. Unter Umständen können durch die Verwendung des Hybridmoduls nach dem Ausführungsbeispiel Schwingungen und Drehungleichförmigkeiten entlang des Antriebsstrangs reduziert und so gegebenenfalls ein Verschleiß von Komponenten reduziert und/oder ein Fahrverhalten verbessert werden. Bei dem Verbrennungsmotor kann es sich beispielsweise um eine Einrichtung handeln, die Brennstoff in einem chemischen Vorgang direkt in eine mechanische Bewegung umsetzt, zum Beispiel Ottomotor, Dieselmotor, Wankelmotor, Gasturbine oder dergleichen.

Ergänzend oder alternativ kann der Antriebsstrang auch zumindest einen Sensor aufweisen, der ausgebildet und angeordnet ist, um eine in dem Antriebsstrang auftretende Drehungleichförmigkeit zu erfassen. So könnte unter Umständen ein von der Elektromaschine der Drehungleichförmigkeit entgegenwirkendes Drehmoment, basierend auf der von dem Sensor erfassten Drehungleichförmigkeit, erzeugt werden.

Bei manchen Ausführungsbeispielen ist der Sensor entlang eines Drehmomentflusses von dem Verbrennungsmotor zu dem zumindest einem angetriebenen Rad hinter und/oder vor dem Hybridmodul angeordnet. Dadurch, dass zumindest ein Sensor außerhalb des Hybridmodul angeordnet ist, kann beispielsweise das Auftreten von Drehungleichförmigkeiten in dem Antriebsstrang selbst und/oder dessen funktionsrelevanten Bauteilen wie zum Beispiel Differential, Getriebe, Fahrwerk und/oder der Karosserie überwacht und entsprechend geregelt werden. Bei manchen Ausführungsbeispielen kann der an dem Antriebsstrang angeordnet Sensor zusätzlich zu dem an dem Hybridmodul angeordneten Sensor vorgesehen sein.

Ausführungsbeispiele betreffen ferner ein Kraftfahrzeug mit dem Hybridmodul und/oder einem Antriebsstrang nach zumindest einem der vorhergehenden Ausführungsbeispiele. Bei dem Kraftfahrzeug könnte beispielsweise ein angenehmes Fahrgefühl bewirkt und ein Verschleiß von Komponenten zumindest reduziert oder sogar verhindert werden durch die beschriebenen Möglichkeiten der Schwingungsreduzierung mit dem Hybridmodul.

Weitere vorteilhafte Ausgestaltungen werden nachfolgend anhand von in den Zeichnungen dargestellten Ausführungsbeispielen, auf welche Ausführungsbeispiele jedoch nicht beschränkt sind, näher beschrieben. Es zeigen:
Fig. 1 eine schematische Darstellung eines Antriebsstrang mit einem Hybridmodul gemäß einem Ausführungsbeispiel;
Fig. 2 eine schematische Darstellung des Hybridmoduls gemäß Fig. 1;
Fig. 3 eine schematische Darstellung eines Drehmomentverlaufs gegenüber einer Auslenkung eines Schwingungsreduzierungssystems eines Hybridmoduls gemäß einem Ausführungsbeispiel;
Fig. 4 eine schematische Darstellung eines quantifizierten Drehmomentverlaufs gegenüber einer Drehzahl einer Elektromaschine für ein Hybridmodul gemäß einem Ausführungsbeispiel;
Fig. 5 eine schematische Darstellung eines Drehmomentverlaufs gegenüber einer Auslenkung eines konventionellen Schwingungsreduzierungssystems;
Fig. 6 eine schematische Darstellung eines Drehmomentverlaufs gegenüber einer Drehzahl einer Elektromaschine für ein Hybridmodul gemäß einem Ausführungsbeispiel;
Fig. 7 eine schematische Darstellung eines quantifizierten Drehmomentverlaufs gegenüber einer Drehzahl eines Verbrennungsmotors gemäß einem Ausführungsbeispiel;
Fig. 8 eine schematische Darstellung einer Mehrzahl von Übertragungsfunktionen für eine Mehrzahl von Drehmomentverläufen eines Drehmomentanteils einer Drehungleichförmigkeit gegenüber einer Drehzahl bei einem Hybridmodul;
Fig. 9 eine schematische Darstellung einer Mehrzahl von Drehmomentverläufen eines Drehmomentanteils einer Drehungleichförmigkeit gegenüber einer Drehzahl bei einem Hybridmodul gemäß einem Ausführungsbeispiel;
Fig. 10 eine schematische Darstellung eines Verfahrens zur Reduzierung einer Drehungleichförmigkeit;
Fig. 11 eine schematische Darstellung eines Antriebsstrangs mit einem Hybridmodul gemäß einem Ausführungsbeispiel;
Fig. 12 eine schematische Darstellung eines Kraftfahrzeugs mit einem Antriebsstrang und/oder einem Hybridmodul gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

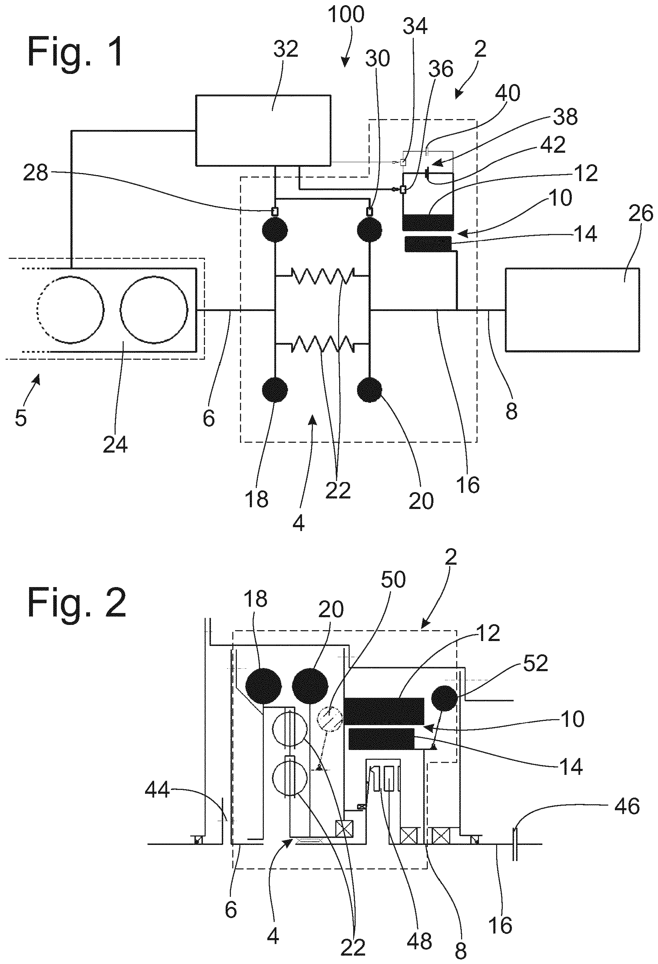

Fig. 1 zeigt eine schematische Darstellung eines Antriebsstrangs 100 mit einem Hybridmodul 2 gemäß einem Ausführungsbeispiel und beschreibt damit im Wesentlichen einen Systemaufbau. Das Hybridmodul 2 umfasst ein Schwingungsreduzierungssystem 4, das zwischen einer Eingangsseite 6 und einer Ausgangsseite 8 des Hybridmoduls 2 gekoppelt ist. Das Schwingungsreduzierungssystem 4 ist ausgebildet, um eine in das Hybridmodul 2 eingekoppelte Drehungleichförmigkeit zu reduzieren. Das Schwingungsreduzierungssystem 4 weist daher eine Vorspannung auf, die höher als eine montagebedingte Vorspannung ist. Zudem umfasst das Hybridmodul 2 auch eine Elektromaschine 10. Die Elektromaschine 10 ist an die Ausgangsseite 8 des Hybridmoduls 2 gekoppelt. Ferner ist die Elektromaschine 10 ausgebildet, um ein Drehmoment an der Ausgangsseite 8 einzuleiten, das einer in das Hybridmodul 2 eingekoppelten Drehungleichförmigkeit entgegengerichtet ist, um diese zu reduzieren. Hier nicht abgebildet, kann die Elektromaschine 10 auch an die Eingangsseite 6 des Hybridmoduls 2 gekoppelt sein.

Bei dem Ausführungsbeispiel nach der Fig. 1 umfasst die Elektromaschine 10, die auch als E-Maschine bezeichnet werden kann, einen Stator 12 und einen Rotor 14. Der Rotor 14 kann mit einer das Drehmoment übertragenden Welle 16 gedreht oder drehbar verbunden werden, während der Stator drehfest gegenüber dem Hybridmodul 2 oder dessen Gehäuse festgelegt ist. Der Stator 12 ist radial außerhalb des Rotors 14 angeordnet, damit handelt es sich bei der Elektromaschine 10 um einen Innenläufer. Bei einigen weiteren, nicht dargestellten Ausführungsbeispielen kann die Elektromaschine auch Außenläufer ausgebildet und der Rotor radial außerhalb des Stators angeordnet sein.

Das Schwingungsreduzierungssystem 4, das auch als passives Schwingungsreduzierungssystem bezeichnet werden kann, umfasst bei dem Ausführungsbeispiel nach der Fig. 1 optional eine Primärträgheit 18, die auch als eine Primärmasse ausgebildet sein kann, und eine Sekundärträgheit 20, die auch als eine Sekundärmasse ausgebildet sein kann. Die Primärträgheit 18 ist mit der Sekundärträgheit 20 über zwei Federelemente 22 verbunden. Das Federelement 22 ist ein Beispiel für eine Struktur, mit der die Steifigkeit und/oder Vorspannung des Schwingungsreduzierungssystems 4 bestimmt oder bewirkt werden kann. Daher können die Federelemente auch als Steifigkeit bezeichnet werden. Als Schwingungsreduzierungssystem 4 können alle möglichen Schwingungsreduzierungssysteme eingesetzt werden, bei denen der Drehmomentfluss von der Eingangsseite 6 zur Ausgangsseite 8 des Hybridmoduls 2 über ein Federelement übertragen werden kann. Das Schwingungsreduzierungssystem 4 kann beispielsweise als ein Zweimasseschwungrad oder als Dämpfer in allen möglichen Formen und Kombinationen ausgebildet sein. Auch bei dem Schwingungsreduzierungssystem 4 wird der Drehmomentfluss von der Primärträgheit 18 über die Federelemente 22 auf die Sekundärträgheit 18 bzw. von einer Eingangsseite des Schwingungsreduzierungssystems 4 zu einer Ausgangsseite des Schwingungsreduzierungssystems 4 übertragen. Der vollständige Drehmomentfluss wird, über die beiden Federelemente 22 übertragen.

Bei einigen weiteren, nicht dargestellten Ausführungsbeispielen weist das Schwingungsreduzierungssystem nur ein Federelement auf. Unter Umständen kann das Schwingungsreduzierungssystem auch eine andere Anzahl an Federelementen, zum Beispiel drei, vier oder eine Mehrzahl aufweisen.

Das Hybridmodul 2 ist wie in Fig. 1 dargestellt, an der Eingangsseite 6 mit einem Verbrennungsmotor 24 einer Antriebsanordnung 5 verbunden. Dabei kann die Antriebsanordnung 5 auch Bauteile wie beispielsweise eine Schwungscheibe mit einem Starterzahnkranz umfassen, die hier jedoch nicht dargestellt sind. Bei dem Verbrennungsmotor 24 handelt es sich um den antreibenden Verbrennungsmotor. Dazu wird ein Drehmoment auf der Eingangsseite 6 in das Hybridmodul 4 eingeleitet und über das Schwingungsreduzierungssystem 4 und die Welle 16 an die Ausgangsseite 8 übertragen. An der Ausgangsseite 8 wird das Drehmoment auf einen Restantriebsstrang 26 übertragen. Der Restantriebsstrang 26 kann beispielsweise ein Getriebe, eine Antriebswelle, zumindest eine Seitenwelle oder eine Mehrzahl von Seitenwellen, zumindest ein Rad und/oder weitere Bauteile des Fahrzeugs umfassen.

Mit dem Schwingungsreduzierungssystem 4 können manche Drehungleichförmigkeiten reduziert werden, die in das Hybridmodul 2, eingekoppelt werden. Bei diesen Drehungleichförmigkeiten kann es sich beispielsweise um Drehungleichförmigkeiten handeln, die im Verbrennungsmotor 24 erzeugt werden und die mit dem Drehmoment, das über das Hybridmodul 2 übertragen werden soll, in das Hybridmodul 2 eingebracht werden. Unabhängig davon können Drehungleichförmigkeiten auch durch einen Betriebszustand des Hybridmoduls 2 oder das Fahrzeug selbst hervorgerufen werden.

Mit der Elektromaschine 10 kann ebenfalls eine Reduzierung der Drehungleichförmigkeiten bewirkt werden, indem ein Drehmoment auf die Welle 16 aufgeprägt wird, das der Drehungleichförmigkeit entgegengerichtet ist. Dem Hybridmodul 2 ist eine Steuerschaltung 32 zugeordnet, mittels der die Elektromaschine 10 für die aktive Schwingungsreduzierung angesteuert wird. Die Steuerschaltung 32 erhält dazu Zustandssignale oder Systemzustandssignal, die eine Information über eine Drehungleichförmigkeit umfassen. Es wird ein Wert des von der Elektromaschine 10 aufzubringenden Drehmoments und dessen Richtung ermittelt. Beispielsweise können die Systemzustandssignale aus dem Verbrennungsmotor 24 oder dessen Steuerschaltung an die Steuerschaltung 32 übermittelt werden.

Bei dem Hybridmodul 2 nach dem Ausführungsbeispiel der Fig. 1 wird dazu auch das Auftreten einer Drehungleichförmigkeit detektiert. Zu diesem Zweck sind zwei Sensoren 28 und 30 vorgesehen, die auch als Zustandserfassungssensoren bezeichnet werden können. Diese können ergänzend oder alternativ zu dem Verbrennungsmotor 24 oder dessen Steuerschaltung die Systemzustandssignale liefern. Die zusätzlichen Sensoren 28 und 30 sind bei dem Ausführungsbeispiel der Fig. 1 jeweils an der Primärträgheit 18 und der Sekundärträgheit 20 angeordnet.

Bei einigen weiteren, nicht dargestellten Ausführungsbeispielen können die Sensoren ergänzend oder alternativ an einer anderen Stelle des Hybridmoduls und/oder anderen Bereichen des Antriebsstrangs oder anderen Stellen des Schwingungsreduzierungssystems vorgesehen sein. Ferner kann dazu zumindest ein Sensor oder eine Mehrzahl von Sensoren vorgesehen sein.

Bei den Systemzustandssignalen, die die Steuerschaltung 32 erhält, kann es sich beispielsweise um einen Drehzahlwinkel und/oder eine Drehbeschleunigung handeln. Die Steuerschaltung 32, die auch als Steuer- und/oder Regeleinheit ausgebildet sein kann, verarbeitet die Systemzustandssignale zu Stellgrößen. Diese Stellgrößen können dann dazu verwendet werden, um die Elektromaschine 10 entsprechend anzusteuern. Die Elektromaschine 10 kann angesteuert werden, um ein der detektierten Drehungleichförmigkeit entgegen gerichtetes Drehmoment auf die Welle 16 aufzubringen. Ergänzend oder alternativ kann das entgegen gerichtete Drehmoment durch die Elektromaschine 10 auch in anderen Bereichen des Hybridmoduls 2 eingekoppelt werden.

Bei manchen Ausführungsbeispielen erfolgt die Regelung der Elektromaschine 10 nur in Abhängigkeit der mit den Sensoren erfassten Größen ohne die Einbeziehung von Signalen und/oder Informationen des Verbrennungsmotors 24.

Das Hybridmodul 2 umfasst auch eine Speichereinheit 38 mit einen Kondensator 40 und einer Batterie 42. In der Speichereinheit 38 kann Energie, die bei einem generatorischen Betrieb der Elektromaschine in elektrische Energie gewandelt wurde, gespeichert werden. Der Kondensator 40 und die Batterie 42 sind parallel zueinander geschaltet. Unter Umständen kann sich der Kondensator 40 besser für eine schnelle Speicherung und Entladung kleiner Energiebeträge und die Batterie 42 für die langsamere Speicherung und Entladung großer Energiebeträge eignen. Bei einigen weiteren, nicht dargestellten Ausführungsbeispielen kann die Speichereinheit auf andere Art und Weise ausgebildet sein und beispielsweise nur die Batterie oder nur den Kondensator umfassen.

Aufgrund der von der Steuerschaltung 32 erzeugten Stellgröße kann die Elektromaschine 10, beispielsweise durch Betätigung der Schalter 34 und/oder 36 so angesteuert werden, dass die Elektromaschine 10 ein Wechselmoment erzeugt, das dem des Verbrennungsmotors 24 auslöschend überlagert wird. Konkret kann dazu die von der Elektromaschine 10 in elektrische Energie umgewandelte Schwingungsenergie aus der Speichereinheit 38 entnommen werden. Um ein Drehmoment in die entgegengesetzte Richtung aufzubringen, kann beispielsweise Schwingungsenergie oder mechanische Energie in elektrische Energie umgewandelt werden und in der Speichereinheit 38 gespeichert werden.

Fig. 2 zeigt eine schematische Darstellung des Hybridmoduls 2 gemäß Fig. 1. Das Hybridmodul 2 der Fig. 2 ist im Wesentlichen analog zum Hybridmodul 2 der Fig. 1 ausgebildet, deshalb werden im Folgenden nur einige Unterschiede zwischen den beiden Modulen beschrieben. Im Wesentlichen gleiche Komponenten werden mit gleichen Bezugszeichen bezeichnet.

Das Hybridmodul 2 der Fig. 2 ist über eine schematisch dargestellte, flexible Anschlussplatte 44 mit einer Kurbelwelle und so dem nicht mehr dargestellten Verbrennungsmotor 24 verbunden. Über eine Kopplungseinrichtung 46, die auch als Getriebetrennkupplung bezeichnet werden kann, kann das Hybridmodul 2 an seiner Ausgangsseite 8 mit dem nicht dargestellten Restantriebsstrang 26 verbunden werden.

Die Elektromaschine 10 ist über eine weitere Kopplungseinrichtung 48, die auch als Motortrennkupplung bezeichnet werden kann, mit dem Schwingungsreduzierungssystem 4 bzw. der Eingangsseite 6 des Hybridmoduls 2 verbindbar oder von diesem trennbar.

Ferner können bei dem Ausführungsbeispiel des Hybridmoduls 2 der Fig. 2 sowohl das Schwingungsreduzierungssystem 4, wie auch der Rotor 14 der Elektromaschine 10 einen Tilger 50 und einen Tilger 52 umfassen. Das Schwingungsreduzierungssystem 4 kann beispielsweise, wie für Fig. 1 beschrieben, ausgebildet sein und zusätzlich den Tilger 50 umfassen, zum Dämpfen von Drehungleichförmigkeiten. Die Tilger 50 und 52 können dazu Massen aufweisen, die ausgelenkt werden, jedoch nicht zur Drehmomentübertragung beitragen. Die Tilger 50 und 52 können beispielsweise als Festfrequenztilger, oder als Ordnungstilger, gegebenenfalls in Form eines Sarazzin-Pendels ausgebildet sein. Bei einem weiteren, nicht dargestellten Ausführungsbeispiel kann das Hybridmodul die beiden Tilger 50 und 52 nicht aufweisen oder nur einen der beiden Tilger aufweisen.

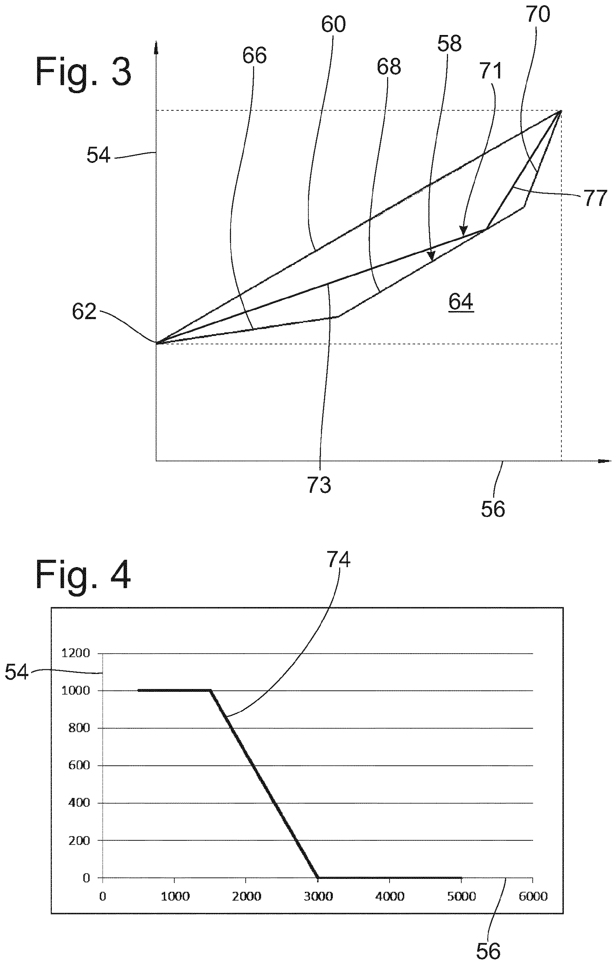

Fig. 3 zeigt eine schematische Darstellung eines Drehmomentverlaufs gegenüber einer Auslenkung des Schwingungsreduzierungssystems 4 des Hybridmoduls 2 gemäß einem Ausführungsbeispiel. Entlang einer Ordinate 54 eines Diagramms ist ein Drehmoment gegenüber einer Auslenkung des Schwingungsreduzierungssystems 4 auf einer Abszisse 56 eingezeichnet. Als Auslenkungsgröße ist auf der Abszisse 56 ein Drehwinkel, beispielsweise ein Drehwinkel, in dem die Primärträgheit 18 gegenüber der Sekundärdrehzahl 20 verdreht wird, aufgetragen.

In dem Diagramm der Fig. 3 sind drei unterschiedliche Kennlinien 58, 60 und 71 eingetragen. Diese ergeben sich für unterschiedliche Ausführungsbeispiele von Schwingungsreduzierungssystemen 4. Den Kennlinien 58, 60 und 71 und damit deren Schwingungsreduzierungssystemen 4 ist gemeinsam, dass sie eine Vorspannung aufweisen. In einem Diagramm der Fig. 3 ist also eine Kennlinie des Schwingungsreduzierungssystems 4 eingetragen, die sich aus einem Drehmomentverlauf einer zu übertragenden Drehmoments in Abhängigkeit einer Auslenkung ergibt, die auch als vorgespannte Federkennlinie bezeichnet werden kann. Ein Moment, das der Vorspannung entspricht, ist mit dem Bezugszeichen 62 gekennzeichnet. Selbst ohne Auslenkung bzw. bei einem Drehwinkel von 0° muss das Drehmoment, das der Vorspannung entspricht, also größer Null (0) ist und auch als Anfangsmoment bezeichnet werden kann, aufgewandt werden, um eine Auslenkung bzw. eine Verdrehung zu bewirken. Kleinere Momente als das Anfangsmoment führen also nicht zu einem Ansprechen des Schwingungsreduzierungssystems 4. Drehungleichförmigkeiten, die einen Drehmomentanteil bewirken, der kleiner ist, als das Drehmoment 62 ist, können bei dem Hybridmodul 2 mit der Schwingungsreduzierungssystem 4 durch eine entsprechende Ansteuerung der Elektromaschine 10 reduziert werden. Die Verwendung eines Schwingungsreduzierungssystems 4 mit einer Kennlinie nach der Fig. 3 in dem Hybridmodul ist also durch die Unterstützung bei der Schwingungsreduzierung durch die Elektromaschine 10 möglich.

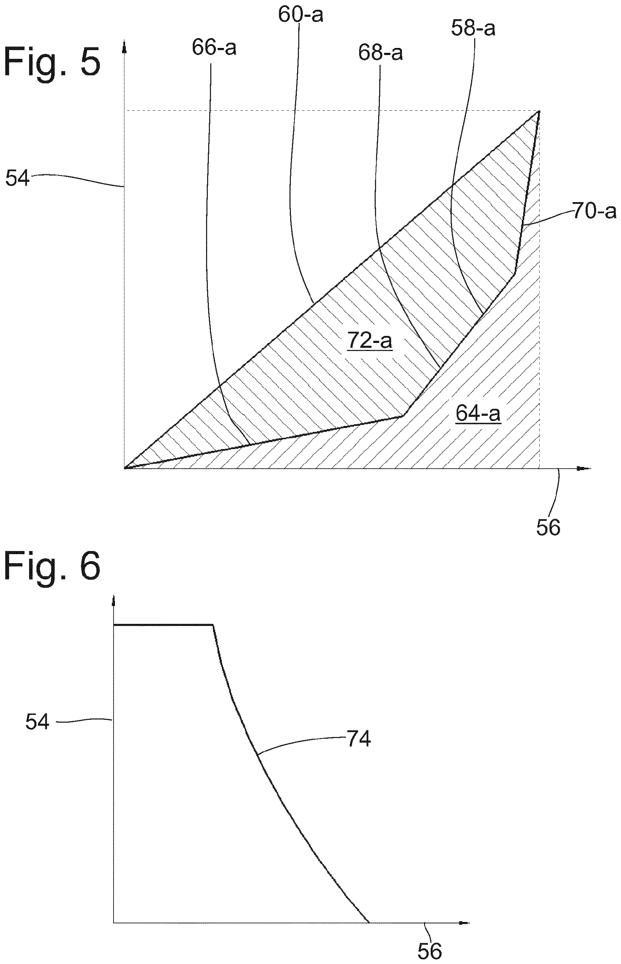

Dadurch, dass das Schwingungsreduzierungssystem 4 die anhand der Kennlinien 58, 60 und 71 der Fig. 3 erkennbare Vorspannung aufweist, können zwei für das Schwingungsreduzierungsverhalten wichtige Effekte erreicht werden. Zum einen vergrößert sich die in dem Schwingungsreduzierungssystem 4 speicherbare Energie. Die in dem Federelement 22 oder dem Schwingungsreduzierungssystem 4 speicherbare Energie wird durch eine Fläche 64 unter der Kennlinie in einem Drehmomentdrehwinkeldiagramm bestimmt. Dies wird beispielsweise durch einen Vergleich mit der Fig. 5 deutlich, die eine schematische Darstellung eines Drehmomentverlaufs gegenüber einer Auslenkung eines konventionellen Schwingungsreduzierungssystems zeigt.

Im Vergleich zur Fig. 3 zeigt Fig. 5 ein solches Drehmoment-Drehwinkel-Diagramm für ein konventionelles Schwingungsreduzierungssystem ohne Vorspannung. Dabei ergeben sich, ebenfalls für unterschiedliche Formen von konventionellen Schwingungsreduzierungssystemen die Kennlinien 58-a und 60-a. Da diese konventionellen Schwingungsreduzierungssysteme keine Vorspannung aufweisen, und die Kennlinien 58-a und 60-a beide durch den Nullpunkt gehen, ist eine Fläche 64-a, die sich unter der Kennlinie 58-a ausbildet, kleiner als die vergleichbare Fläche 64 im Diagramm der Fig. 3. Die Flächen 64 und 64-a stellen der Federarbeit unter der mehrstufigen Kennlinie dar. Bei dem konventionellen Schwingungsreduzierungssystem, für das sich die Kennlinie 58-a ergibt, können in einer ersten sehr weichen Stufe 66-a, die auch als Start oder Leerlaufstufe bezeichnet werden kann, Drehungleichförmigkeiten oder Schwingspiele reduziert werden, die bei kleinen oder mittleren Drehmomenten und Drehmomentamplituden, wie beispielsweise im Leerlauf oder beim Kriechen des Fahrzeugs oder der Verbrennungsmotors auftreten. An die erste Stufe 66-a schließt als zweite Stufe 68-a, die auch als Fahrstufe bezeichnet werden kann, ein weiterer mittelweicher Abschnitt an. Diese dient zur Reduzierung oder Entkopplung bei mittleren bis hohen Drehungleichförmigkeiten, die beispielsweise bei Volllast oder bei einer Beschleunigung auftreten können. Die zweite Stufe kann bei einigen weiteren, nicht dargestellten Ausführungsbeispielen je nach gewünschter oder benötigter Abstimmung weitere Knickstellen mit unterschiedlichen oder sich ändernden Steifigkeiten bzw. Steigungen aufweisen, um eine näherungsweise progressive Kennlinie zu erhalten. Als dritte Stufe 70-a, die auch als Anschlagstufe bezeichnet werden kann, weist das Schwingungsreduzierungssystem zu dem die Kennlinie 58-a korrespondiert, einen verhältnismäßig steifen Bereich auf, in diesem sollen hohe Momente aufgenommen werden, wie sie beispielsweise über eine Überlastung oder einem Anschlag oder dergleichen entstehen können. Die Kennlinie 58-a kann auch als konventionelle Federkennlinie eines Drehungleichförmigkeitsreduziersungssystem bezeichnet werden. Demgegenüber handelt es sich bei der Kennlinie 58 der Fig. 3 um die verbesserte Kennlinie, die durch Unterstützung der Elektromaschine 10 möglich ist. Dies umfasst ebenfalls drei Stufen 66, 68 und 70.

Verglichen mit der Fläche 64-a unter der Kennlinie 58-a, die sich als Maß für die Energiespeicherfähigkeit des konventionellen Schwingungsreduzierungssystems ergibt, das zu der zweifach geknickten Kennlinie 58-a korrespondiert, weist ein Schwingungsreduzierungssystem, für das sich die Kennlinie 60-a ergibt, ein maximales Arbeitsvermögen oder eine Energiespeicherfähigkeit bei gleichem maximalen Drehmoment und Auslenkung bzw. Drehwinkel auf. Ein solches konventionelles Schwingungsreduzierungssystem weist eine lineare Kennlinie auf. Gegenüber der Energiespeicherfähigkeit des Schwingungsreduzierungssystems mit der Kennlinie 60-a verliert das Schwingungsreduzierungssystem mit der Kennlinie 58-a die Energiespeicherfähigkeit der Fläche 72-a, die auch als Federarbeit der einstufigen Feder, der einstufigen Schwingungsreduzierungssystems bzw. der einstufigen Kennlinie 60-a bezeichnet werden kann. Dies ist dem Kompromiss zwischen den beschriebenen Anforderungen aus unterschiedlichen Betriebszuständen geschuldet.

Zudem wird an dem Verlauf der Kennlinien 60-a und 58-a deutlich sichtbar, dass das Schwingungsreduzierungssystem, das zu der Kennlinie 58-a korrespondiert, in der zweiten Stufe 68-a, also dem Fahrbereich, eine deutlich größere Steifigkeit aufweist, als die im Wesentlichen linear verlaufende Kennlinie 60-a des anderen Schwingungsreduzierungssystems. Dazu wird in diesem Bereich eine schlechtere Entkopplung bewirkt.

Die für die Fig. 5 beschriebenen Kennlinien und Drehmomentverläufe können beispielsweise für alle möglichen Schwingungsreduzierungssysteme gelten, wie Zweimasseschwungräder, Dämpfersysteme und Wandler von Phasenschiebern von leistungsverzweigten Drehungleichförmigkeitsreduziersungssystemen und/oder deren Federelemente.

Neben der vergrößerten Energiespeicherfähigkeit, wie aus dem Vergleich der Flächen 64 und 64-a erkennbar, wird als weiterer Effekt der Vorspannung bewirkt, dass das Schwingungsreduzierungssystem 4 für vergleichbare Auslenkungen geringere Steifigkeiten und damit geringere Steigungen aufweisen kann als konventionelle Schwingungsreduzierungssysteme, zu denen die Drehmomentverläufe bzw. Kennlinien 60-a und 58-a nach der Fig. 5 korrespondieren. Die Kennlinien 60-a und 58-a verlaufen die bei gleichem maximalem Drehmoment und Auslenkung bzw. Drehwinkel durch den Nullpunkt, um alle Lastzustände, das heißt auch die mit kleinem Drehmoment, abdecken zu können. Dies führt also dazu, dass alle Kennlinienpositionen der Kennlinien 60 und 58 nach der Fig. 3 eine geringere Steifigkeit oder Steigung aufweisen als die in Fig. 5 gezeigten vergleichbaren Kennlinien 60-a und 58-a für konventionelle Schwingungsreduzierungssysteme ohne Vorspannung. Besonders die zweite Stufe 68 der Kennlinie 58 kann weniger steif als die korrespondierende zweite Stufe 68-a bei Schwingungsreduzierungssystemen ohne Vorspannung ausgebildet sein. Zudem decken die erste und die zweite Stufe 66 und 68 des Schwingungsreduzierungssystems 4 jeweils eine Auslenkung ab, die ca. 40% einer Gesamtauslenkung entspricht.

Das Schwingungsreduzierungssystem 4, zu dem die Kennlinie 60 korrespondiert, wäre, analog zu dem Schwingungsreduzierungssystem, das zu der Kennlinie 60-a korrespondiert, besonders geeignet um möglichst viel Energie zu speichern, da es als lineare Kennlinie die geringste Steigung über den gesamten Auslenkungsbereich oder Winkelbereich aufweist und damit auch die maximal mögliche Federarbeit abbildet.

Dadurch, dass durch die Vorspannung bestimmte Drehmomente für das passive Schwingungsreduzierungssystem 4 ausgeblendet werden bzw. diese nicht zu einem Ansprechen des Schwingungsreduzierungssystems 4 führen, kann das Schwingungsreduzierungssystem 4 für einen geringeren Betriebsbereich des Hybridmoduls ausgelegt werden. Indem andere Betriebsbereich, in denen Drehungleichförmigkeiten mit Drehmomentanteilen erzeugt werden, die nicht von dem passiven Schwingungsreduzierungssystem 4 ausgeglichen oder reduziert werden können, erfolgt die Dämpfung oder Reduzierung dieser Drehungleichförmigkeiten mittels der Elektromaschine 10. Weil die anderen Betriebszustände nicht zu einer Verformung des Schwingungsreduzierungssystems 4 oder dessen Federelement 22 führen, bleibt ein größerer Verformungsweg des Schwingungsreduzierungssystems 4 oder dessen Federelement 22 für die anderen Betriebszustände mit höheren Drehzahlen zur Verfügung.

Dass die Elektromaschine 10 zum Reduzieren der Drehungleichförmigkeiten in einem niedrigen Drehzahlbereichen eingesetzt wird, kann beispielsweise dem Verhalten der Elektromaschine 10 bei unterschiedlichen Drehzahlen geschuldet sein. Dieses Verhalten wird anhand der Fig. 4 und 6 genauer beschrieben. Die Elektromaschine 10 lässt sich motorisch, also als elektrisch-mechanischer Wandler und generatorisch, also als mechanisch-elektrischer Wandler betreiben. Schaltet man die elektrische Speichereinheit 38 hinter die Elektromaschine 10, so lässt sich ein Speicher für Energie darstellen, im Wesentlichen analog wie für das passive Schwingungsreduzierungssystem 4 oder eine Feder bzw. das Federelement 22 beschrieben.

Die Fig. 4 und 6 zeigen eine schematische Darstellung eines Drehmomentverlaufs gegenüber einer Drehzahl der Elektromaschine 10 für das Hybridmodul 2 gemäß einem Ausführungsbeispiel. Entlang der Ordinate 54 ist in ein Diagramm ein Drehmoment gegenüber einer Drehzahl entlang der Abszisse 56 aufgetragen. Bei dem Drehmoment handelt es sich dabei um das Drehmoment, das von der Elektromaschine 10 abgegeben oder aufgenommen werden kann. Aus einem Verlauf einer Drehmomentkennlinie 74 für die Elektromaschine 10 kann abgelesen werden, dass die Elektromaschine 10 bei einer kleinen Drehzahl ein hohes Drehmoment abgeben kann und bei höheren Drehzahlen nur noch ein niedrigeres Drehmoment abgeben kann.

Die Elektromaschine 10 kann, zum Beispiel wenn der Verbrennungsmotor 24 einen Drehmoment- bzw. Leistungsüberschuss liefert, diesen generatorisch in elektrische Energie umwandeln und in einem der Speichereinheit 38 zwischenspeichern, um dann, wenn der Verbrennungsmotor 24 eine Schwankung im Drehmoment bzw. der Leistung nach unten vollführt, diese aus dem Speicher oder aus der Speichereinheit 38 motorisch ausgleichen. Dies entspricht dem Prinzip der aktiven Schwingungsreduzierung.

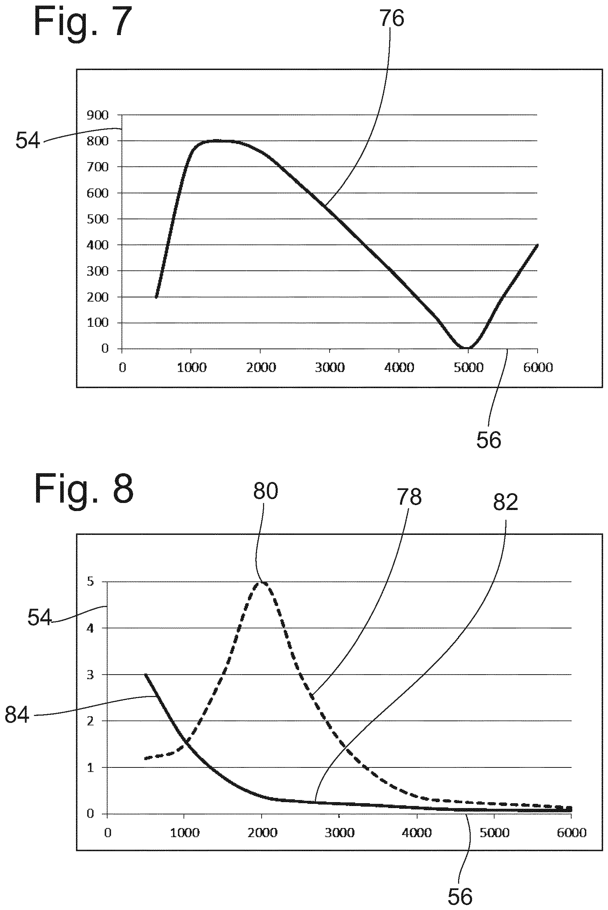

Fig. 4 zeigt einen solchen Drehmomentverlauf für eine Elektromaschine 10 an einem konkreten Ausführungsbeispiel. Entlang der Ordinate 54 ist eine Momentamplitude der Elektromaschine 10 in Nm aufgetragen gegenüber einer Drehzahl entlang der Abszisse 56. Wie aus der Kennlinie 74 für das spezielle Ausführungsbeispiel der Elektromaschine 10 nach Fig. 4 hervorgeht, fällt das zur Verfügung stehende Drehmoment beispielsweise bei einer Drehzahl knapp unter 2000 U/min stark ab. Das Diagramm der Fig. 4 stellt, anders als die Fig. 6 einen quantifizierten Drehmomentverlauf dar, um in Kombination mit den Fig. 7, 8 und 9 eine Wirkungsweise eines Hybridmoduls 2 gemäß Ausführungsbeispielen näher erläutern zu können.

Fig. 7 zeigt eine schematische Darstellung eines quantifizierten Drehmomentverlaufs gegenüber einer Drehzahl eines Verbrennungsmotors gemäß einem Ausführungsbeispiel. Dabei handelt es sich um eine Momentamplitude der Hauptanregenden, in Form des Verbrennungsmotors 24 für das Hybridmodul 2. Als Kennlinie 76 ist der Verlauf für eine Anregungsmomentamplitude im Falle einer zweiten Ordnung des Verbrennungsmotors 24, der als Vierzylindermotors ausgebildet ist, gegenüber einer Drehzahl eingetragen. Die Anregungsmomentamplituden sind in Newtonmeter (Nm) entlang der Ordinate 54 gegenüber den auf der Abszisse 56 aufgetragenen Drehzahlen eingezeichnet. Das maximale Anregungsmoment tritt bei ca. 1000 U/min auf. Ein Minimum der Anregungsmomentamplitude liegt bei etwa 5000 U/min. Das Minimum kann sich beispielsweise aufgrund einer Auslöschung von Gas- und Massenkräften in dem Vierzylindermotor ergeben.

Fig. 8 zeigt eine schematische Darstellung einer Mehrzahl von Übertragungsfunktionen für eine Mehrzahl von Drehmomentverläufen eines Drehmomentanteils einer Drehungleichförmigkeit gegenüber einer Drehzahl für ein mit einem Schwingungsreduzierungssystem ohne Unterstützung der Elektromaschine 10. Die Übertragungsfunktionen umfassen eine Information über ein Verhältnis zwischen einer Ausgangsseite zu einer Eingangsseite des Schwingungsreduzierungssystems 4. Bei den zueinander in ein Verhältnis gesetzten Größen kann es sich beispielsweise um Schwingungswinkel, Schwingungswinkelgeschwindigkeiten, Drehbeschleunigungen und/oder Wechselmomente handeln.

Als Übertragungsfunktion 78 ist ein Verhalten, das sich mit einem Schwingungsreduzierungssystem, das zu der Kennlinie 60-a der Fig. 5 korrespondiert, also ohne Vorspannung und ohne Unterstützung der Elektromaschine 10 ergibt. Aufgrund der relativ hohen Steifigkeit tritt eine Resonanzüberhöhung 80 in einem Fahrbereich auf, also beispielsweise bei Drehzahlen von 2000 U/min. Die Übertragungsfunktion 78 umfasst also eine Information über einen Zustand in einem Hybridmodul mit einem konventionellen Schwingungsreduzierungssystem ohne Vorspannung und ohne Unterstützung der Elektromaschine 10.

Ferner ist in Fig. 8 auch eine Übertragungsfunktion 82 eingezeichnet, die sich für ein Schwingungsreduzierungssystem 4 mit der Kennlinie 60 der Fig. 3 ergeben würde, also mit Unterstützung der Elektromaschine 10, jedoch in einstufiger Ausführung. Eine Resonanzstelle 84 oder ein Resonanzbereich liegt nicht im unmittelbaren Fahrbereich, also beispielsweise außerhalb von Drehzahlen um ca. 2000 U/min. Stattdessen tritt eine hohe Amplitude bei kleinen Drehzahlen auf. Die hohe Amplitude ist durch das Bezugszeichen 84 gekennzeichnet und tritt bei einer Drehzahl unter 1000 U/min auf. Bereits bei Drehzahlen größer 2000 U/min, fällt die Übertragungsfunktion 82 stark ab und schmiegt sich dann asymptotisch an die Abszisse 56 an. Bei Drehzahlen über 1000 U/min treten also bei dem Ausführungsbeispiel, für das sich die Übertragungsunktion 82 ergibt, keine kritischen Resonanzüberhöhungen, Schwingungen oder Drehungleichförmigkeiten auf.

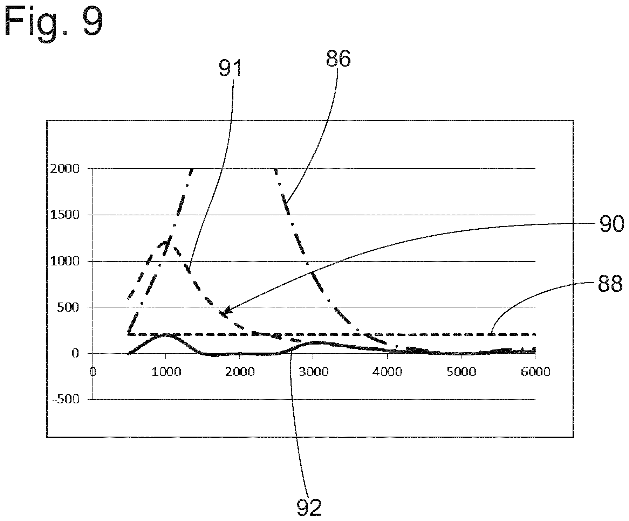

Fig. 9 zeigt eine schematische Darstellung einer Mehrzahl von Drehmomentverläufen eines Drehmomentanteils einer Drehungleichförmigkeit gegenüber einer Drehzahl bei einem Hybridmodul 2 gemäß einem Ausführungsbeispiel. Die Fig. 9 zeigt also die Verhältnisse an der Getriebeeingangswelle bzw. an einer Ausgangsseite 8 des Hybridmoduls 2, beispielsweise für den Fall, wenn die Motoranregung aus der Fig. 7 mit den Übertragungsfunktionen 78 bzw. 82 aus der Fig. 8 multipliziert wird.

Ohne die Elektromaschine 10 zur Drehmomentungleichförmigkeitsreduzierung einzusetzen, also ohne Elektromaschinenunterstützung, würde sich aus der Übertragungsfunktion 78 der Fig. 8 ein Drehmomentverlauf gemäß der Kennlinie 86 ergeben. Der Drehmomentverlauf nach der Kennlinie 86 stellt ein Wechselmoment an der Getriebeeingangswelle bei einer konventionellen Auslegung dar. Dabei wird eine Grenzkurze 88, die einen tolerablen Bereich, in dem Drehungleichförmigkeiten auftreten dürfen bzw. akzeptiert werden, bei Weitem überschritten.

In Fig. 9 sind auch Kennlinien 90 und 92 für Drehmomentverläufe eingetragen, die sich aus einer Wirkung der Elektromaschine 10 in Verbindung mit dem Schwingungsreduzierungssystem 4 an einer Getriebeeingangswelle, mit der das Hybridmodul 2 gekoppelt ist, ergeben. Der Drehmomentverlauf oder das Schwingungsverhalten bzw. die Drehungleichförmigkeitsreduzierung kann durch Nutzung der Elektromaschine 10 als unterstützende Drehungleichförmigkeitsreduzierungselement, das auch als DU-Reduzierungselement abgekürzt werden kann, verbessert werden. Ziel ist, alle auftretenden Drehungleichförmigkeiten soweit zu dämpfen, dass sie die Grenzkurve 88, die einer Zielvorgabe für die Drehungleichförmigkeitsreduzierung entspricht, nicht überschreiten. Die Grenzkurve 88 ist als Gerade ausgebildet, die für alle Drehzahlen, bei einem Drehmoment von unter 250 Nm liegt.

Wird die Elektromaschine 10 dahingehend genutzt, dass mit dem passiven Schwingungsreduzierungssystem 4 nicht mehr alle Betriebszustände abzudecken sind, wie beispielsweise der Bereich 66-a der Fig. 5 für Niedriglastzustände nicht erforderlich sind, so ergibt sich als erste Verbesserung ein Drehmomentverlauf bzw. ein Verhalten nach der Kennlinie 90. Die Kennlinie 90 stellt ein Wechselmoment dar, das an der Getriebeeingangswelle auftritt, unter Verwendung eines Schwingungsreduzierungssystems 4 mit einem einstufigen Verlauf, zu dem die Kennlinie 60 korrespondiert, aber noch ohne aktives Reduzierungsmoment durch die Elektromaschine 10. Die Verwendung eines vorgespannten Schwingungsreduzierungssystems 4 führt dazu, dass bei kleineren Drehzahlen, also vor das vorgespannte Schwingungsreduzierungssystem 4 greift, Drehungleichförmigkeiten auftreten, die über der Grenzkurve 88 liegen, wie an dem Abschnitt 91 der Kennlinie 90 erkennbar.

Wenn nun die Elektromaschine 10 gegenphasig mit ihrer Momentkapazität, wie beispielsweise in den Fig. 6 oder 4 dargestellt, eingreift bzw. angesteuert wird, so kann sich ein reduzierter Drehmomentverlauf gemäß der Kennlinie 92 ergeben. Die Anregung kann also auf den als Kennlinie 92 dargestellten Verlauf reduziert werden. Die auftretenden Drehungleichförmigkeiten weisen dann alle nur noch Drehmomentanteile auf, die unter der Grenzkurve 88 liegen. Die Kennlinie 92 stellt also das an der Getriebeeingangswelle auftretende Wechselmoment dar, mit einer Auslegung des Schwingungsreduzierungssystems 4 und der Unterstützung der Elektromaschine 10.

Bei einigen weiteren, nicht dargestellten Ausführungsbeispielen, können übliche Betriebszustände bzw. deren Drehzahlen, Grenzwerte oder kritische Drehungleichförmigkeiten, je nach Anwendung bei anderen Werten liegen.

Manche Ausführungsbeispiele betreffen demnach das Hybridmodul 2 mit einem System zur aktiven Schwingungsreduzierung durch die Elektromaschine 10 und ein zusätzliches System 4 zur passiven Schwingungsreduzierung. Dabei können gegebenenfalls Bereiche zur bevorzugten Schwingungsreduzierung durch das passive Schwingungsreduzierungssystem 4 und Bereich zur Schwingungsreduzierung durch das aktive Schwingungsreduzierungssystem 10 festgelegt werden. Das passive Schwingungsreduzierungssystem kann bei manchen Ausführungsbeispielen in Abhängigkeit von dem bevorzugten Bereich der Schwingungsreduzierung für diese Systeme ausgelegt werden. Dazu können gegebenenfalls Komponenten wie Steifigkeit der Feder, Anzahl der Stufen usw. angepasst werden. Die Elektromaschine 10 kann entweder vor oder nach dem passiven oder zusätzlichen Schwingungsreduzierungssystem 4 angeordnet und/oder einbezogen werden. Es wird also eine Kombination aus einem Drehungleichförmigkeitsreduzierungssystem mit aktiver Schwingungsreduzierung durch die Elektromaschinen beschrieben.

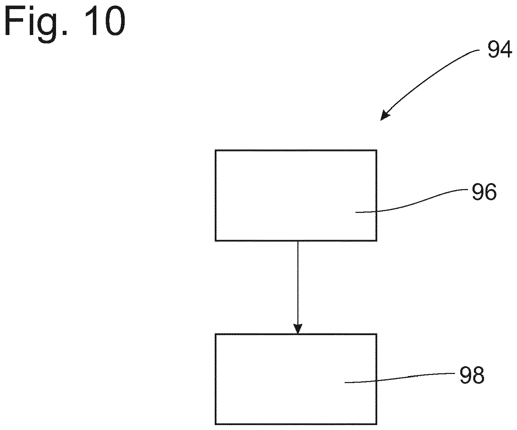

Fig. 10 zeigt eine schematische Darstellung eines Verfahrens 94 zur Reduzierung einer Drehungleichförmigkeit. Bei dem Verfahren 94 wird in einem ersten Vorgang 96 eine Schwingungsreduzierung durchgeführt. Dies erfolgt mittels eines Schwingungsreduzierungssystems 4, das zwischen einer Ausgangsseite 8 und einer Eingangsseite 6 des Hybridmoduls 2 gekoppelt und ausgebildet ist, um eine eingekoppelte Drehungleichförmigkeit zu reduzieren. Das Schwingungsreduzierungssystem 4 weist eine Vorspannung auf, die höher als eine montagebedingte Vorspannung ist. In einem zweiten Vorgang 98 wird ein Drehmoment in das Hybridmodul 2 eingeleitet, das eingekoppelten Drehungleichförmigkeit entgegengerichtet ist, mittels einer Elektromaschine 10, die an die Ausgangsseite 8 des Hybridmoduls 2 gekoppelt ist. Die Vorgänge 96 und 98 können in unterschiedlicher Reihenfolge, gleichzeitig und/oder teilweise überlappend durchgeführt werden.

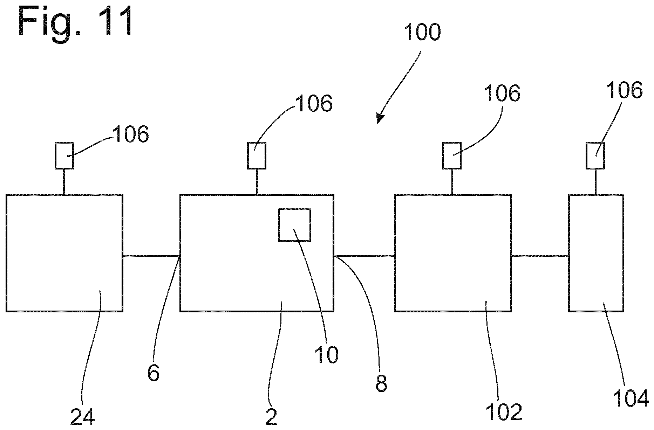

Fig. 11 zeigt eine schematische Darstellung des Antriebsstrangs 100 mit einem Hybridmodul 2 gemäß einem Ausführungsbeispiel. Das Hybridmodul 2 ist an seiner Eingangsseite 6 mit einem Verbrennungsmotor 24 gekoppelt. An seiner Ausgangsseite 8 ist das Hybridmodul 2 mit einem Getriebe 102 gekoppelt. Mit dem Getriebe 102 kann ferner zumindest ein antreibbares Rad 104 gekoppelt sein. An dem Antriebsstrang 100 kann zumindest ein Sensor 106 angeordnet sein. Der Sensor 106 ist ausgebildet und angeordnet, um eine in dem Antriebsstrang 100 auftretende Drehungleichförmigkeit zu erfassen. Von der Elektromaschine 10 kann dann ein, der Drehungleichförmigkeit entgegenwirkendes Drehmoment, basierend auf der von dem Sensor 106 erfassten Drehungleichförmigkeit erzeugt werden. Es kann sich anbieten den Sensor 106 an einer Stelle des Antriebsstrangs 100 zu platzieren, an der aus funktionstechnischen Gründen das Auftreten von Schwingungen oder Drehungleichförmigkeiten möglichst gering sein soll. So kann auf tatsächlich auftretende Drehungleichförmigkeiten reagiert werden. Beispielsweise kann der Sensor 106 oder eine Mehrzahl von Sensoren an einem Fahrwerk oder an dem Rad 104, an dem Getriebe 102, an dem Verbrennungsmotor 24 und/oder anderen nicht dargestellten Karosserieteilen angeordnet sein. Unter Umständen kann das Hybridmodul 2 selbst die zusätzlich die Sensoren 28 und 30, nach dem Ausführungsbeispiel der Fig. 1, umfassen. Bei manchen Ausführungsbeispielen könne die Sensoren 28 und 30 entfallen, wenn der Sensor 106 an dem Antriebsstrang 100 angeordnet ist.

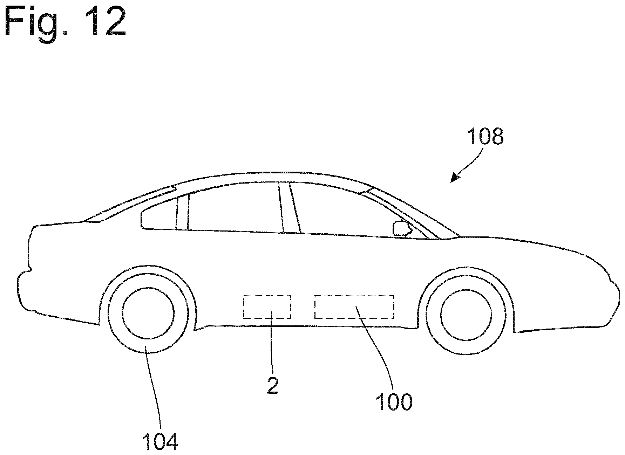

Fig. 12 zeigt eine schematische Darstellung eines Kraftfahrzeugs 108 mit einem Antriebsstrang 100 und/oder einem Hybridmodul 2 gemäß einem Ausführungsbeispiel. Der Sensor 106 Sensoren können beispielsweise an allen möglichen Stellen des Kraftfahrzeugs 108 oder dessen Karosserie angeordnet sein.

Die in der vorstehenden Beschreibung und den beigefügten Figuren offenbarten Ausführungsbeispiele sowie deren einzelne Merkmale können sowohl einzeln wie auch in beliebiger Kombination im Rahmen der nachfolgenden Ansprüchen für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können gegebenenfalls auch Merkmale, die in manchen Ausführungsbeispielen als Verfahrensmerkmale implementiert sind, in anderen Ausführungsbeispielen als Vorrichtungsmerkmale implementiert sein.

### Bezugszeichen

- 2: Hybridmodul
- 4: Schwingungsreduzierungssystem
- 5: Antriebsanordnung
- 6: Eingangsseite
- 8: Ausgangsseite
- 10: Elektromaschine
- 12: Stator
- 14: Rotor
- 16: Welle
- 18: Primärträgheit
- 20: Sekundärträgheit
- 22: Federelement
- 24: Verbrennungsmotor
- 26: Restantriebsstrang
- 28: Sensor
- 30: Sensor
- 32: Steuerschaltung
- 34: Schalter
- 36: Schalter
- 38: Speichereinheit
- 40: Kondensator
- 42: Batterie
- 44: flexible Anschlussplatte
- 46: Kopplungseinrichtung
- 48: Kopplungseinrichtung
- 50: Tilger
- 52: Tilger
- 54: Ordinate
- 56: Abszisse
- 58: Kennlinie
- 60: Kennlinie
- 62: Vorspannmoment
- 64: Fläche unter Kennlinie
- 66: erste Stufe
- 68: zweite Stufe
- 70: dritte Stufe
- 71: Kennlinie
- 72: Fläche unter Kennlinie
- 73: erste Stufe
- 74: Drehmomentkennlinie
- 76: Anregungsmomentamplitude
- 77: zweite Stufe
- 78: Übertragungsfunktion
- 80: Resonanzüberhöhung
- 82: Übertragungsfunktion
- 84: Amplitudenkennlinie Drehmoment
- 86: Kennlinie ohne Unterstützung der Elektromaschine
- 88: Grenzkurve
- 90: Drehmomentverlauf vorgespanntes Schwingungsreduzierungssystem
- 91: Abschnitt
- 92: Kennlinie
- 94: Verfahren
- 96: erster Vorgang
- 98: zweiter Vorgang
- 100: Antriebsstrang
- 102: Getriebe
- 104: antreibbares Rad
- 106: Sensor

## Patentansprüche

1. Hybridmodul (2) mit folgenden Merkmalen:
einem Schwingungsreduzierungssystem (4), das zwischen einer Ausgangsseite (8) und einer Eingangsseite (6) des Hybridmoduls (2) gekoppelt und ausgebildet ist, um eine eingekoppelte Drehungleichförmigkeit zu reduzieren, wobei das Schwingungsreduzierungssystem (4) eine Vorspannung aufweist, die höher als eine montagebedingte Vorspannung ist und mindestens einem Anteil von 5% eines an der Eingangsseite (6) maximal einkoppelbaren Drehmoments entspricht, wobei das Schwingungsreduzierungssystem (4) über eine Auslenkung einen im Wesentlichen lineare Drehmomentverlauf (60, 58) aufweist, die mindestens einem Anteil von 40% einer Gesamtauslenkung entspricht, in dem das Schwingungsreduzierungssystem (4) beanspruchbar ist; und
einer Elektromaschine (10), die an die Eingangsseite (6) oder an die Ausgangsseite (8) des Hybridmoduls (2) gekoppelt und ausgebildet ist, um ein Drehmoment an der Eingangsseite (6) oder an der Ausgangseite (8) einzuleiten, das einer in das Hybridmodul (2) eingekoppelten Drehungleichförmigkeit entgegengerichtet ist, um diese zu reduzieren,
wobei das Schwingungsreduzierungssystem (4) ausgebildet ist, um die Drehungleichförmigkeit bei einer zweiten Drehzahl stärker zu reduzieren als bei einer ersten Drehzahl, bei der zum Reduzieren der Drehungleichförmigkeit ein Drehmoment von der Elektromaschine (10) einleitbar ist.

2. Hybridmodul nach Anspruch 1, das ausgebildet ist, um mit einem Verbrennungsmotor (24) gekoppelt zu sein, wobei die Vorspannung einem Drehmoment entspricht, das größer ist, als ein Drehmomentanteil einer Drehungleichförmigkeit, der bei einem Anlassen oder in einem unteren Drehzahlbereich des Verbrennungsmotors (24) auftritt.

3. Hybridmodul nach einem der vorhergehenden Ansprüche, wobei das Schwingungsreduzierungssystem (4) über eine Gesamtauslenkung, in der das Schwingungsreduzierungssystem (4) beanspruchbar ist, einen Drehmomentverlauf (58) mit maximal drei unterschiedlichen Steigungen (66, 68, 70) aufweist.

4. Hybridmodul nach einem der vorhergehenden Ansprüche, wobei das Schwingungsreduzierungssystem (4) über seine Gesamtauslenkung einen im Wesentlichen linearen Drehmomentverlauf (60) aufweist.

5. Hybridmodul nach einem der vorhergehenden Ansprüche, wobei das Schwingungsreduzierungssystem (4) wenigstens ein Federelement (22) umfasst, wobei ein Drehmomentfluss von einer Eingangsseite (6) zu einer Ausgangsseite (8) über das Federelement (22) verläuft und wobei die Vorspannung des Schwingungsreduzierungssystems (4) wenigstens teilweise durch eine Vorspannung des wenigstens einen Federelements (22) gebildet ist, wobei die Vorspannung des wenigstens einen Federelements (22) höher als eine montagebedingte Vorspannung ist.

6. Hybridmodul nach einem der vorhergehenden Ansprüche, wobei ein Drehmoment der Elektromaschine (10) zwischen dem Schwingungsreduzierungssystem (4) und der Ausgangsseite (8) des Hybridmoduls (2) einkoppelbar ist und/oder die Elektromaschine (10) zwischen dem Schwingungsreduzierungssystem (4) und der Ausgangsseite (8) des Hybridmoduls (2) angeordnet ist.

7. Hybridmodul nach einem der vorhergehenden Ansprüche, wobei das Schwingungsreduzierungssystem (4) zumindest ein Zweimasseschwungrad und/oder zumindest eine Leistungsverzweigung und/oder zumindest einen Torsionsschwingungsdämpfer umfasst.

8. Hybridmodul nach einem der vorhergehenden Ansprüche, das eine Steuerschaltung (32) umfasst, die ausgebildet ist, um die Elektromaschine (10) basierend auf einer erfassten Drehungleichförmigkeit so anzusteuern, dass die Elektromaschine (10) ein Drehmoment an der Ausgangseite (8) einleitet, das der Drehungleichförmigkeit entgegengerichtet ist, um diese zu reduzieren.

9. Hybridmodul nach einem der vorhergehenden Ansprüche, das zumindest einen Sensor (28, 30, 106) umfasst, der ausgebildet ist, um ein Auftreten der Drehungleichförmigkeit zu erfassen.

10. Antriebsstrang (100) mit folgenden Merkmalen:
einem Hybridmodul (2) nach einem der vorhergehenden Ansprüche, das an seiner Eingangsseite (6) mit einem Verbrennungsmotor (24) und an seiner Ausgangsseite (8) mit einem Getriebe (26) gekoppelt ist, das ausgangsseitig mit zumindest einem angetriebenen Rad (104) gekoppelt ist.

11. Antriebsstrang nach Anspruch 10, der ferner zumindest einen Sensor (106) umfasst, der ausgebildet und angeordnet ist, um eine in dem Antriebsstrang (100) auftretende Drehungleichförmigkeit zu erfassen, wobei ein von der Elektromaschine (10) der Drehunförmigkeit entgegenwirkendes Drehmoment, basierend auf der von dem Sensor (106) erfassten Drehungleichförmigkeit erzeugt wird.

12. Antriebsstrang nach Anspruch 11, wobei der Sensor (106) entlang eines Drehmomentflusses von dem Verbrennungsmotor (24) zu dem zumindest einem angetriebenen Rad (104) hinter und/oder vor dem Hybridmodul (2) angeordnet ist.

## Claims

1. Hybrid module (2) with the following features:
a vibration reduction system (4) which is coupled between an output side (8) and an inlet side (6) of the hybrid module (2) and is configured to reduce a rotational non-uniformity which is coupled in, the vibration reduction system (4) having a prestress which is higher than an assembly-induced prestress and corresponds at least to a proportion of 5% of a maximum torque which can be coupled in on the input side (6), the vibration reduction system (4) having, over a deflection, a substantially linear torque characteristic (60, 58) which corresponds at least to a proportion of 40% of an overall deflection, in which the vibration reduction system (4) can be loaded; and
an electric machine (10) which is coupled to the input side (6) or to the output side (8) of the hybrid module (2) and is configured to introduce a torque on the input side (6) or on the output side (8), which torque is directed counter to a rotational non-uniformity which is coupled into the hybrid module (2), in order to reduce the said rotational non-uniformity,
the vibration reduction system (4) being configured to reduce the rotational non-uniformity to a greater extent at a second rotational speed than at a first rotational speed, at which a torque can be introduced by the electric machine (10) in order to reduce the rotational non-uniformity.

2. Hybrid module according to Claim 1 which is configured to be coupled to an internal combustion engine (24), the prestress corresponding to a torque which is greater than a torque proportion of a rotational non-uniformity, which torque proportion occurs in the case of a starting operation or in a lower rotational speed range of the internal combustion engine (24).

3. Hybrid module according to either of the preceding claims, the vibration reduction system (4) having a torque characteristic (58) with a maximum of three different gradients (66, 68, 70) over an overall deflection, in which the vibration reduction system (4) can be loaded.

4. Hybrid module according to one of the preceding claims, the vibration reduction system (4) having a substantially linear torque characteristic (60) over its overall deflection.

5. Hybrid module according to one of the preceding claims, the vibration reduction system (4) comprising at least one spring element (22), a torque flow running from an input side (6) to an output side (8) via the spring element (22), and the prestress of the vibration reduction system (4) being formed at least partially by way of a prestress of the at least one spring element (22), the prestress of the at least one spring element (22) being higher than an assembly-induced prestress.

6. Hybrid module according to one of the preceding claims, it being possible for a torque of the electric machine (10) to be coupled in between the vibration reduction system (4) and the output side (8) of the hybrid module (2), and/or the electric machine (10) being arranged between the vibration reduction system (4) and the output side (8) of the hybrid module (2).

7. Hybrid module according to one of the preceding claims, the vibration reduction system (4) comprising at least one dual mass flywheel and/or at least one power split system and/or at least one torsional vibration damper.

8. Hybrid module according to one of the preceding claims which comprises a control circuit (32) which is configured to actuate the electric machine (10) in a manner which is based on a detected rotational non-uniformity, in such a way that the electric machine (10) introduces a torque on the output side (8), which torque is directed counter to the rotational non-uniformity, in order to reduce the latter.

9. Hybrid module according to one of the preceding claims which comprises at least one sensor (28, 30, 106) which is configured to detect an occurrence of the rotational non-uniformity.

10. Drive train (100) with the following features:
a hybrid module (2) according to one of the preceding claims which is coupled on its input side (6) to an internal combustion engine (24) and on its output side (8) to a transmission (26) which is coupled on the output side to at least one driven wheel (104).

11. Drive train according to Claim 10 which, furthermore, comprises at least one sensor (106) which is configured and arranged to detect a rotational non-uniformity which occurs in the drive train (100), a torque which is brought about by the electric machine (10) counter to the rotational non-uniformity being generated in a manner which is based on the rotational non-uniformity which is detected by the sensor (106).

12. Drive train according to Claim 11, the sensor (106) being arranged downstream and/or upstream of the hybrid module (2) along a torque flow from the internal combustion engine (24) to the at least one driven wheel (104) .

## Revendications

1. Module hybride (2) comportant les éléments caractéristiques suivants :
un système de réduction de vibrations (4) qui est accouplé entre un côté sortie (8) et un côté entrée (6) du module hybride (2) et qui est conçu pour réduire une irrégularité de rotation injectée par couplage, le système de réduction de vibrations (4) présentant une précontrainte qui est supérieure à une précontrainte liée au montage et qui correspond à au moins une pourcentage de 5 % d'un couple maximal qui peut être injecté par couplage du côté entrée (6),le système de réduction de vibrations (4) présentant une courbe de couple (60, 58) sensiblement linéaire sur une déflexion qui correspond à au moins un pourcentage de 40 % d'une déflexion totale à laquelle le système de réduction de vibrations (4) peut être soumis ; et
une machine électrique (10) qui est accouplée au côté entrée (6) ou au côté sortie (8) du module hybride (2) et qui est conçue pour injecter du côté entrée (6) ou du côté sortie (8) un couple qui s'oppose à l'irrégularité de rotation injectée par couplage dans le module hybride (2) afin de réduire celle-ci,
le système de réduction de vibrations (4) étant conçu pour réduire l'irrégularité de rotation plus fortement à une deuxième vitesse de rotation qu'à une première vitesse de rotation à laquelle un couple peut être injecté par la machine électrique (10) pour réduire l'irrégularité de rotation.

2. Module hybride selon la revendication 1, qui est conçu pour être accouplé à un moteur à combustion interne (24), la précontrainte correspondant à un couple qui est supérieur à une composante de couple d'une irrégularité de rotation qui apparaît lors du démarrage ou dans une plage de vitesses de rotation inférieure du moteur à combustion interne (24).

3. Module hybride selon l'une des revendications précédentes, le système de réduction de vibrations (4) présentant sur une déflexion totale, à laquelle le système de réduction de vibrations (4) peut être soumis, une courbe de couple (58) présentant un maximum de trois pentes différentes (66, 68, 70).

4. Module hybride selon l'une des revendications précédentes, le système de réduction de vibrations (4) présentant une courbe de couple (60) sensiblement linéaire sur sa déflexion totale.

5. Module hybride selon l'une des revendications précédentes, le système de réduction de vibrations (4) comprenant au moins un élément à ressort (22), un flux de couple se produisant d'un côté d'entrée (6) vers un côté de sortie (8) par le biais de l'élément à ressort (22) et la précontrainte du système de réduction de vibrations (4) étant formée au moins partiellement par une précontrainte de l'au moins un élément à ressort (22), la précontrainte de l'au moins un élément à ressort (22) étant supérieure à une précontrainte liée au montage.

6. Module hybride selon l'une des revendications précédentes, un couple de la machine électrique (10) pouvant être injecté par couplage entre le système de réduction de vibrations (4) et le côté sortie (8) du module hybride (2) et/ou la machine électrique (10) étant disposée entre le système de réduction de vibrations (4) et le côté sortie (8) du module hybride (2) .

7. Module hybride selon l'une des revendications précédentes, le système de réduction de vibrations (4) comprenant au moins un volant à deux masses et/ou au moins un répartiteur de puissance et/ou au moins un amortisseur de vibrations de torsion.

8. Module hybride selon l'une des revendications précédentes, comprenant un circuit de commande (32) qui est conçu pour commander la machine électrique (10) sur la base d'une irrégularité de rotation détectée de telle sorte que la machine électrique (10) injecte au côté sortie (8) un couple qui s'oppose à l'irrégularité de rotation afin de réduire celle-ci.

9. Module hybride selon l'une des revendications précédentes, comprenant au moins un capteur (28, 30, 106) qui est conçu pour détecter une occurrence de l'irrégularité de rotation.

10. Chaîne de transmission (100) comprenant les éléments caractéristiques suivants :
un module hybride (2) selon l'une des revendications précédentes, lequel est accouplé à son côté entrée (6) à un moteur à combustion interne (24) et à son côté sortie (8) à une transmission (26) qui est accouplée du côté sortie à au moins une roue entraînée (104).

11. Chaîne de transmission selon la revendication 10, comprenant en outre au moins un capteur (106) qui est conçu et disposé pour détecter une irrégularité de rotation se produisant dans la chaîne de transmission (100), un couple qui s'oppose à l'irrégularité de rotation depuis la machine électrique (10) étant généré sur la base de l'irrégularité de rotation (106) détectée par le capteur.

12. Chaîne de transmission selon la revendication 11, le capteur (106) étant disposé le long d'un flux de couple allant du moteur à combustion interne (24) à l'au moins une roue entraînée (104) en aval et/ou en amont du module hybride (2).
